# EUROPEAN PATENT APPLICATION

(11) **EP 4 575 571 A1**
(43) Date of publication of application: **25.06.2025**
(21) Application number: 23217867.3
(22) Date of filing: 19.12.2023
(51) Int. Cl.: G01S 7/53, G01S 7/539, G01S 15/00, G01S 15/10, G01S 15/42, G01S 15/931

(54) **METHOD AND APPARATUS FOR PROCESSING DATA ASSOCIATED WITH AT LEAST ONE ULTRASONIC SENSOR**

(71) Applicant: Robert Bosch GmbH, 70442 Stuttgart (DE)
(72) Inventor: Geiler, Thomas, 71134 Aidlingen (DE); Remenyi, Istvan, 2890 Tata (HU); Glavinics, Judit Reka, 1103 Budapest (HU); Schumann, Michael, 70597 Stuttgart (DE); Benyuska, Krisztian, 1041 Budapest (HU); Juhasz, Peter Laszlo, 1119 Budapest (HU); LAKATOS, PETER, 2610 Nötincs (HU); Borbely, Zoltan, 1103 Budapest (HU); POZSEGOVICS, PETER, 1141 Budapest (HU); Rempfer, Georg, 71229 Leonberg (DE)

(57) **Abstract**

A method for processing data associated with at least one ultrasonic sensor, comprising: receiving at least one signal characterizing at least a portion of a transmitted ultrasonic signal, determining, based on the at least one signal, a two-dimensional data set having a plurality of cells characterizing potential positions of an object relative to an ultrasonic sensor associated with the at least one signal, processing the data set using a neural network.

## Description

### Technical Field

The disclosure relates to a method for processing data associated with at least one ultrasonic sensor.

The disclosure further relates to an apparatus for processing data associated with at least one ultrasonic sensor.

### Summary

Some example embodiments relate to a method, for example a computer-implemented method, for processing data associated with at least one ultrasonic sensor, comprising: receiving at least one signal characterizing at least a portion of a transmitted ultrasonic signal, determining, based on the at least one signal, a two-dimensional data set representing a plurality of cells characterizing potential positions of an object relative to the ultrasonic sensor associated with the at least one signal, processing the data set using a, for example artificial, neural network.

In some examples, the ultrasonic sensor may comprise or represent at least one receiver for receiving ultrasonic signals.

In some examples, the ultrasonic sensor may comprise at least one transmitter for transmitting ultrasonic signals.

In some examples, the ultrasonic sensor may comprise at least one transceiver or transducer for transmitting and receiving ultrasonic signals, e.g., in a time division duplex scheme.

In some examples, the at least one signal characterizing at least a portion of a transmitted ultrasonic signal is, e.g., an electric signal, such as, e.g., a voltage, e.g., an output voltage as provided by an ultrasonic receiver.

In some examples, the at least one signal characterizing at least a portion of a transmitted ultrasonic signal may be a digital signal, e.g. a time-discrete and/or value-discrete signal. In some examples, such digital signal may be obtained by converting an analog output signal of an ultrasonic receiver using an analog-to-digital converter.

In some examples, the portion of the transmitted ultrasonic signal may be a received portion of an ultrasonic signal that has been transmitted by a transmitter and that has been reflected and/or scattered by at least one object before it is received by a receiver. Thus, in other words, in some examples, the portion of the transmitted ultrasonic signal may comprise information related to the at least one object, e.g., an obstacle, which, in some examples, may be evaluated, e.g., using the neural network.

In some examples, the cells of the two-dimensional data set are associated with discretized relative positions, e.g., with respect to a receiver that receives the portion of the transmitted ultrasonic signal, wherein in some examples, a spatial resolution may be determined based on a specific application. In some examples, e.g., if the principle according to the disclosure is used for obstacle detection in a vehicle such as a car, a spatial resolution of some centimeters, e.g., 10 cm, per cell, may be used.

In some examples, the data set represents a rectangular array (e.g., being organized in rows and columns) of the cells corresponding to respective relative positions with respect to the ultrasonic sensor, wherein each cell may be assigned, e.g., may comprise, at least one cell value based on the at least one signal.

In some examples, the cell value may be a scalar. In some examples, the cell value may be a vector, e.g., comprising more than one element.

In some examples, the cell values may be determined based on the at least one signal characterizing the at least a portion of a transmitted ultrasonic signal.

In some examples, the neural network is a convolutional neural network, for example of the U-Net type, wherein, for example, the neural network is configured to receive image data as input data.

In some examples, image data denotes two-dimensional data, e.g., representing a matrix-type or arrangement, e.g., rectangular array, of scalar values or vectors.

In some examples, the two-dimensional data set representing the plurality of cells represents image data, wherein, for example, a respective cell characterizes a respective two-dimensional spatial coordinate, e.g., corresponding with a picture element, e.g., pixel, of the image data, and wherein a cell value of the respective cell characterizes at least one "intensity" or signal value of the respective pixel of the image data. In some examples, a cell value of the respective cell may be assigned or modified based on the at least one signal characterizing at least a portion of the transmitted ultrasonic signal.

In some examples, the method comprises: determining at least one echo based on the at least one signal, determining a, for example elliptic, curve associated with the at least one echo, modifying the data set based on the curve.

In some examples, an echo is characterized by a, for example local, maximum of the at least one signal. In some examples, the, for example local, maximum is a portion or part of the at least one signal where a signal amplitude exceeds a, for example predetermined, threshold.

In some examples, the ultrasonic signal may be transmitted by a transmitter arranged at a first position, and a reflected and/or scattered portion of the transmitted ultrasonic signal may be received by a receiver arranged at a second position, which is different from the first position. In some examples, a travel time, e.g., "round-trip" travel time, can be determined based on the ultrasonic signal and the received, e.g., reflected and/or scattered, portion of the ultrasonic signal. In some examples, based on the travel time, a relative distance between the transmitter and the receiver may be determined, and, based on the relative distance, the, for example elliptic, curve may be determined, wherein the first position and the second position correspond with respective focal points of the elliptic curve.

In some examples, the method comprises: mapping the curve to the plurality of cells, modifying, e.g., assigning or incrementing or decrementing, a cell value of a respective cell based on the mapping.

In some examples, mapping the curve to the plurality of cells may comprise at least one of: a) determining whether the curve intersects a specific cell, and, if so, assigning a, for example non-vanishing, cell value or modifying the cell value, or b) repeating aspect a) for at least one further cell, e.g., for all cells.

In some examples, the method comprises: determining a feature based on the at least one signal, modifying, e.g., assigning or incrementing or decrementing, a cell value of a respective cell based on the feature.

In some examples, the feature comprises at least one of: a) an amplitude of at least one echo associated with the at least one signal, or b) an average background noise associated with the at least one signal, or c) a number of echoes associated with the at least one signal. In some other examples, combinations of the aforementioned example feature aspects and/or other features are possible.

In some examples, the method comprises: providing the data set in a form of one or more layers to the neural network, wherein for example each layer of the one or more layers represents the plurality of cells and corresponding cell values associated with at least one feature determined based on the at least one signal, and, optional, processing the one or more layers using the neural network. In some examples, e.g., if each cell is assigned two values, e.g. as a vector with two elements, a first layer of the data set may be formed by the first cell value, and a second layer of the data set may be formed by the second cell value.

In some examples, the method comprises: configuring, e.g., training, the neural network to provide, as output data, a two-dimensional data set representing the plurality of cells, wherein each cell is associated with at least one of: a) a first output value characterizing a probability for a presence of the object and/or at least one further object, or b) a second output value characterizing a height of the object and/or of at least one further object.

In some examples, the method comprises providing, e.g., receiving, a plurality of signals characterizing at least a portion of a respective plurality of transmitted ultrasonic signals, determining the two-dimensional data set based on the plurality of signals. In some examples, the plurality of signals may be obtained by repeatedly transmitting ultrasonic signals from a transmitter to a receiver. In some other examples, the plurality of signals may be obtained by transmitting ultrasonic signals from different transmitters to one or more receivers.

Some examples relate to an apparatus configured to perform the method according to the disclosure.

Some examples relate to a control unit, e.g., an electronic control unit, e.g., for a vehicle, e.g., car or truck.

Some examples relate to a vehicle, e.g., car or truck, comprising at least one apparatus according to the disclosure and/or at least one control unit according to the disclosure.

Some examples relate to a computer program comprising instructions which, when the program is executed by a computer, cause the computer to carry out the method according to the disclosure.

Some examples relate to a computer-readable storage medium comprising instructions which, when executed by a computer, cause the computer to carry out the method according to the disclosure.

Some examples relate to a data carrier signal carrying and/or characterizing the computer program according to the disclosure.

Some examples relate to a use of the method according to the disclosure and/or of the apparatus according to the disclosure and/or of the computer program according to the disclosure and/or of the computer-readable storage medium according to the disclosure and/or of the data carrier signal according to the disclosure for at least one of: a) processing at least one signal characterizing at least a portion of a transmitted ultrasonic signal, or b) using a neural network to determine a position of an object, or c) using a neural network to determine a height of an object, or d) assisting a parking procedure of a vehicle, or e) triggering an emergency break of a vehicle.

### Brief Description of Example Figures

Some example embodiments will now be described with reference to the accompanying drawings, in which:
- Fig. 1: schematically depicts a simplified flow chart according to some examples,
- Fig. 2: schematically depicts a simplified diagram according to some examples,
- Fig. 3: schematically depicts a simplified diagram according to some examples,
- Fig. 4: schematically depicts a simplified diagram according to some examples,
- Fig. 5: schematically depicts a simplified flow chart according to some examples,
- Fig. 6: schematically depicts a simplified flow chart according to some examples,
- Fig. 7: schematically depicts a simplified flow chart according to some examples,
- Fig. 8: schematically depicts a simplified flow chart according to some examples,
- Fig. 9: schematically depicts a simplified flow chart according to some examples,
- Fig. 10A: schematically depicts a simplified diagram according to some examples,
- Fig. 10B: schematically depicts a simplified diagram according to some examples,
- Fig. 11: schematically depicts a simplified flow chart according to some examples,
- Fig. 12: schematically depicts a simplified block diagram according to some examples,
- Fig. 13: schematically depicts aspects of use according to some examples,
- Fig. 14: schematically depicts a simplified flow chart according to some examples,
- Fig. 15: schematically depicts a simplified block diagram according to some examples.

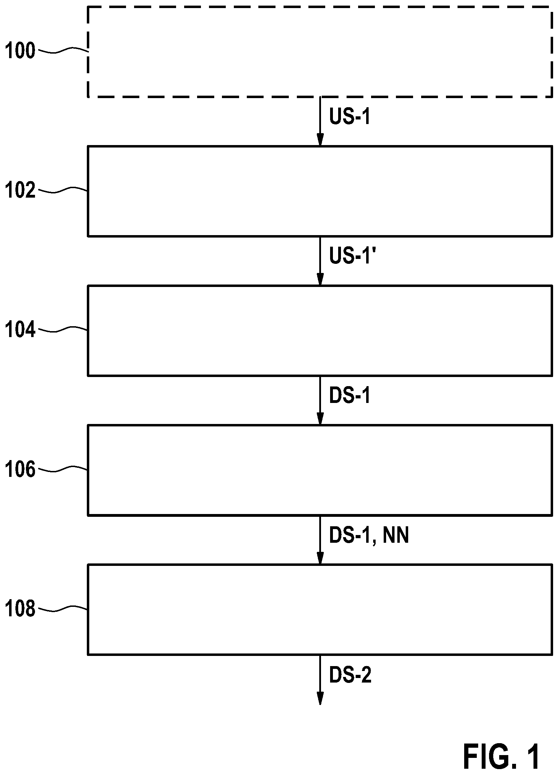

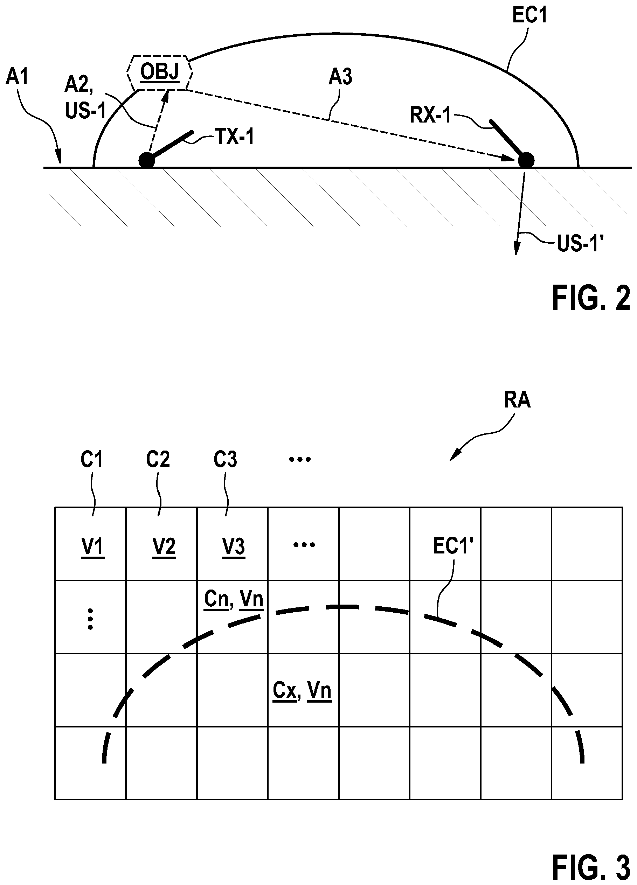

Some embodiments, see for example Fig. 1, 2, 3, relate to a method, for example a computer-implemented method, for processing data associated with at least one ultrasonic sensor, comprising: receiving 102 (Fig. 1) at least one signal US-1' characterizing at least a portion of a transmitted ultrasonic signal US-1, determining 104, based on the at least one signal US-1', a two-dimensional data set DS-1 representing a plurality of cells C1, C2, C3 (Fig. 3) characterizing potential positions of an object OBJ (Fig. 2) relative to the ultrasonic sensor associated with the at least one signal US-1', processing 106 the data set DS-1 using a, for example artificial, neural network NN.

In some examples, Fig. 2, the ultrasonic sensor may comprise or represent at least one receiver RX-1 for receiving ultrasonic signals.

In some examples, Fig. 2, the ultrasonic sensor may comprise at least one transmitter TX-1 for transmitting ultrasonic signals US-1.

In some examples, Fig. 2, the ultrasonic sensor may comprise at least one transceiver or transducer for transmitting and receiving ultrasonic signals, e.g., in a time division duplex scheme. In some examples, the transceiver may, e.g., comprise the transmitter TX-1 and the receiver RX-1.

In some examples, Fig. 2, the at least one signal US-1' characterizing at least a portion of a transmitted ultrasonic signal US-1 is, e.g., an electric signal, such as, e.g., a voltage, e.g., an output voltage as provided by an ultrasonic receiver RX-1.

In some examples, the at least one signal US-1' characterizing at least a portion of a transmitted ultrasonic signal US-1 may be a digital signal, e.g. a time-discrete and/or value-discrete signal. In some examples, such digital signal may be obtained by converting an analog output signal of an ultrasonic receiver RX-1 using an analog-to-digital converter (not shown).

In some examples, Fig. 2, the portion of the transmitted ultrasonic signal US-1 may be a received portion of an ultrasonic signal US-1 that has been transmitted by a transmitter TX-1 and that has been reflected and/or scattered by at least one object OBJ before it is received by a receiver RX-1. Thus, in other words, in some examples, the portion of the transmitted ultrasonic signal may comprise information related to the at least one object OBJ, e.g., an obstacle, which, in some examples, may be evaluated, e.g., using the neural network.

Fig. 2 schematically depicts the transmitter TX-1 configured to transmit the ultrasonic signal US-1, also see the dashed arrow A2, wherein the transmitter TX-1 is arranged at a first position, e.g., relative to the object OBJ, e.g., mounted in a target system such as a component of, e.g., a vehicle, see arrow A1. In some examples, a portion of the transmitted ultrasonic signal US-1 may be reflected and/or scattered by the object OBJ, and the reflected and/or scattered portion A3 may be received by the receiver RX-1, e.g., to provide the at least one signal US-1' based on the received signal portion A3. In some examples, based on a travel time of the signal(s) A2, A3, a portion of an elliptic curve EC1 may be determined, wherein the position of the components TX-1, RX-1 represents the two focal points of the elliptic curve EC1.

In some examples, Fig. 1, the method may also comprise transmitting 100 the ultrasonic signal US-1.

In some examples, Fig. 1, the method may comprise evaluating 108 an output of the neural network NN, wherein the output may, e.g., also represent a data set, e.g., a two-dimensional (or higher dimensional) data set DS-2.

In some examples, Fig. 3, the cells C1, C2, C3, ... of the two-dimensional data set DS-1, an example illustration of which is depicted by Fig. 3, are associated with discretized relative positions, e.g., with respect to a receiver RX-1 (Fig. 2) that receives the reflected and/or scattered portion A3 of the transmitted ultrasonic signal US-1, wherein in some examples, a spatial resolution may be determined based on a specific application. In some examples, e.g., if the principle according to the disclosure is used for obstacle detection in a vehicle such as a car, a spatial resolution of some centimeters, e.g., 10 cm, per cell, may be used.

In some examples, Fig. 3, the data set DS-1 represents a rectangular array RA (e.g., being organized in rows and columns) of the cells C1, C2, C3, ... corresponding to respective relative positions with respect to the ultrasonic sensor (e.g., the receiver RX-1 and/or transmitter TX-1), wherein each cell may be assigned, e.g., may comprise, at least one cell value V1, V2, V3, ... based on the at least one signal US-1'.

In some examples, the cell value V1, V2, V3, ... may be a scalar. In some examples, the cell value V1, V2, V3, ... may be a vector, e.g., comprising more than one element.

In some examples, the cell values V1, V2, V3, ... may be determined based on the at least one signal US-1' characterizing the at least a portion of a transmitted ultrasonic signal US-1.

In some examples, the neural network NN is a convolutional neural network, CNN, for example of the U-Net type, wherein, for example, the neural network is configured to receive image data as input data.

In some examples, the U-Net type or architecture is associated with at least some of the following aspects. The U-Net architecture may comprise an encoder-decoder structure, wherein, for example, the encoder is configured to capture contextual information of input data, e.g., an input image or other two-dimensional data such as, e.g. the data set DS-1, e.g., through a series of convolutional layers and, for example, layers of other types, such as, e.g., pooling layers (e.g., for max-pooling, and the like). In some examples, the decoder of the U-Net architecture may use this contextual information to generate output data, e.g., a segmentation or feature map, that may have same or similar spatial dimensions as the input data.

In some examples, the U-Net architecture may comprise a contracting path, e.g., encoder, the contracting path, e.g., forming a left side of the U-shape. In some examples, the encoder may contain several convolutional layers, e.g., followed by max-pooling layers, wherein these layers e.g., progressively, reduce spatial dimensions of the input image, e.g., while increasing a number of feature channels, which may enable to help the neural network learn high-level features and abstractions.

In some examples, the U-Net architecture may comprise an expansive path, e.g., decoder, which forms a right side of the U-shape. In some examples, the decoder consists of a series of upsampling and/or convolutional layers, e.g., to gradually increase spatial dimensions of the data, e.g., transforming it back to, e.g., an original input size. In some examples, skip connections may be provided, e.g., to connect elements or layers of the expansive path with corresponding elements or layers of the contracting path. In some examples, the skip connections may enable the decoder to access, e.g., low-level features and fine-grained details from the encoder, which may be beneficial, e.g., for an accurate segmentation.

In some examples, other types or architectures of neural networks, i.e., other CNN types or other types than CNN, may be used for the neural network NN.

In some examples, image data as may e.g. be provided as input to a U-Net-type CNN, denotes two-dimensional data, e.g., representing a matrix-type or arrangement, e.g., rectangular array, of scalar values or vectors.

In some examples, the two-dimensional data set DS-1 (Fig. 1, 3) representing the plurality of cells C1, C2, C3, ... represents image data, wherein, for example, a respective cell Cn characterizes a respective two-dimensional spatial coordinate, e.g., corresponding with a picture element, e.g., pixel, of the image data, and wherein a cell value Vn of the respective cell Cn characterizes at least one "intensity" or signal value of the respective pixel of the image data. In some examples, a cell value Vn of the respective cell Cn may be assigned or modified based on the at least one signal US-1' characterizing at least a portion of the transmitted ultrasonic signal US-1.

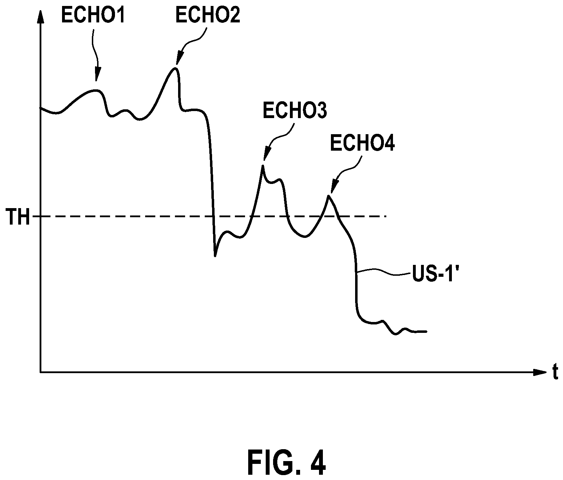

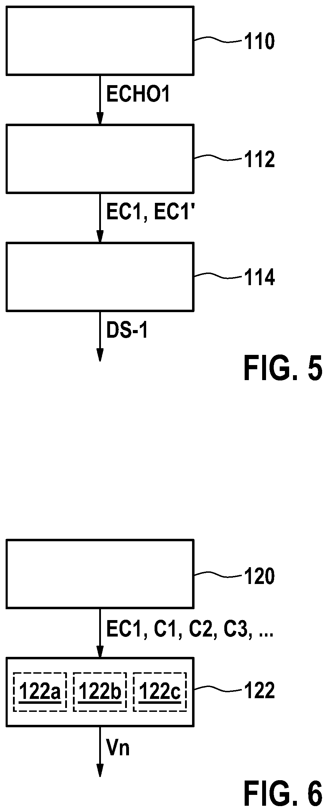

In some examples, Fig. 4, 5, the method comprises: determining 110 at least one echo ECHO1 based on the at least one signal US-1', determining 112 a, for example elliptic, curve EC1, EC1' associated with the at least one echo ECHO1, modifying 114 the data set DS-1 based on the curve EC1, EC1'.

In some examples, Fig. 4, an echo ECHO1 is characterized by a, for example local, maximum of the at least one signal US-1'. In some examples, the, for example local, maximum is a portion or part of the at least one signal US-1' where a signal amplitude exceeds a, for example predetermined, threshold TH. As an example, Fig. 4 schematically depicts the signal US-1' over time, the threshold TH and four example echoes ECHO1, ECHO2, ECHO3, ECHO4, which may, e.g., be caused by reflections and/or scattering of the transmitted signal US-1 (Fig. 2) at one or more objects OBJ.

In some examples, Fig. 2, as mentioned above, the ultrasonic signal US-1 may be transmitted by a transmitter TX-1 arranged at a first position, and a reflected and/or scattered portion A3 of the transmitted ultrasonic signal US-1 may be received by a receiver RX-1 arranged at a second position, which is different from the first position. In some examples, a travel time, e.g., "round-trip" travel time, can be determined based on the ultrasonic signal A2 and the received, e.g., reflected and/or scattered, portion A3 of the ultrasonic signal. In some examples, based on the travel time, a relative distance between the transmitter TX-1 and the receiver RX-1 may be determined, and, based on the relative distance, the, for example elliptic, curve EC1 may be determined, wherein the first position and the second position correspond with respective focal points of the elliptic curve EC1.

In some examples, Fig. 6, the method comprises: mapping 120 the curve EC1 to the plurality of cells C1, C2, C3, ..., modifying 122, e.g., assigning 122a or incrementing 122b or decrementing 122c, a cell value Vn of a respective cell Cn based on the mapping 120.

In this regard, dashed curve EC1' of Fig. 3 schematically depicts aspects of the curve EC1 mapped to the cells C1, C2, C3, .... In some examples, Fig. 3, mapping 120 the curve EC1 to the plurality of cells may comprise at least one of: a) determining whether the curve EC1, EC1' intersects a specific cell Cx, and, if so, assigning a, for example non-vanishing, cell value Vx or modifying the cell value Vx, or b) repeating aspect a) for at least one further cell, e.g., for all cells. As an example, for the curve EC1' of Fig. 3, as the curve EC1' intersects cell Cn, the cell value Vn may be modified accordingly, e.g., may be set to a non-zero value (e.g., assuming an initialization state with all cell values set to, e.g., zero). As a further example, for the curve EC1' of Fig. 3, as the curve EC1' does not intersect cell Cx, its cell value Vx is not modified, e.g., may retain its initialization or current state.

In some embodiments, e.g., as mentioned above, alternatively to assigning a specific cell value, a, for example already existing, e.g., potentially non-zero current cell value may be modified based on the mapping 120, e.g., by incrementing the cell value, e.g., if the curve EC1' intersects a specific cell. This way, in some examples, the cells or their cell values may, e.g., be used for integrating values associated, e.g., with different curves (e.g., as obtained by several received signal portions), thus, e.g., indicating by a current cell value whether, e.g., a large number of ellipses has been mapped to a respective cell.

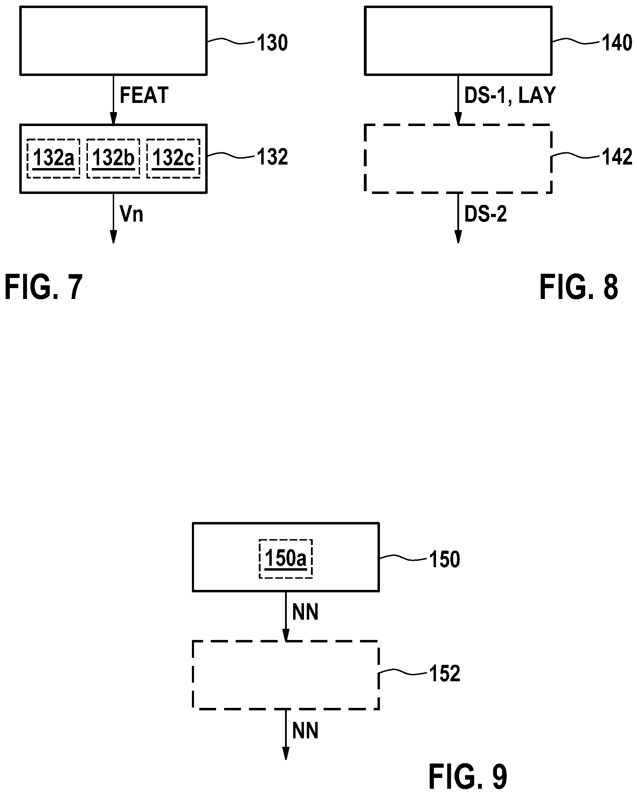

In some examples, Fig. 7, the method comprises: determining 130 a feature FEAT based on the at least one signal US-1' (Fig. 4), modifying 132, e.g., assigning 132a or incrementing 132b or decrementing 132c, a cell value Vn of a respective cell Cn based on the feature FEAT.

In some examples, the feature FEAT comprises at least one of: a) an amplitude of at least one echo ECHO1 (Fig. 4) associated with the at least one signal US-1', or b) an average background noise associated with the at least one signal US-1', or c) a number of echoes ECHO1, ECHO2, ECHO3, ECHO4 associated with the at least one signal US-1' (presently, e.g., four echoes in Fig. 4). In some other examples, combinations of the aforementioned example feature aspects and/or other features FEAT are possible.

As an example, Fig. 4, for each echo ECHO1, ..., ECHO4 of the at least one signal US-1', a respective (e.g., elliptic) curve may be determined, and the cell values of one or more, for example all, cells of the data set DS-1 may be modified as mentioned above, e.g., with respect to Fig. 6 or Fig. 7, e.g., for each of the determined curves, wherein the Fig. 3 example only depicts a single curve EC1' for the sake of clarity. This way, in some examples, information derived from the at least one signal US-1', e.g., using at least one or more features FEAT, may be provided to the data set DS-1, which characterizes input data for the neural network.

In some examples, Fig. 8, the method comprises: providing 140 the data set DS-1 in a form of one or more layers LAY to the neural network NN, wherein for example each layer of the one or more layers LAY represents the plurality of cells C1, C2, C3, ... and corresponding cell values V1, V2, V3 associated with at least one feature FEAT determined based on the at least one signal US-1', and, optional, processing 142 the one or more layers LAY using the neural network NN. In some examples, e.g., if each cell is assigned two values (not shown), e.g. as a vector with two elements, a first layer of the data set may be formed by the first cell value, and a second layer of the data set may be formed by the second cell value. Thus, in some examples, a first layer may be provided comprising cell values associated with a first feature, wherein at least one further layer may be provided comprising cell values associated with at least one further feature.

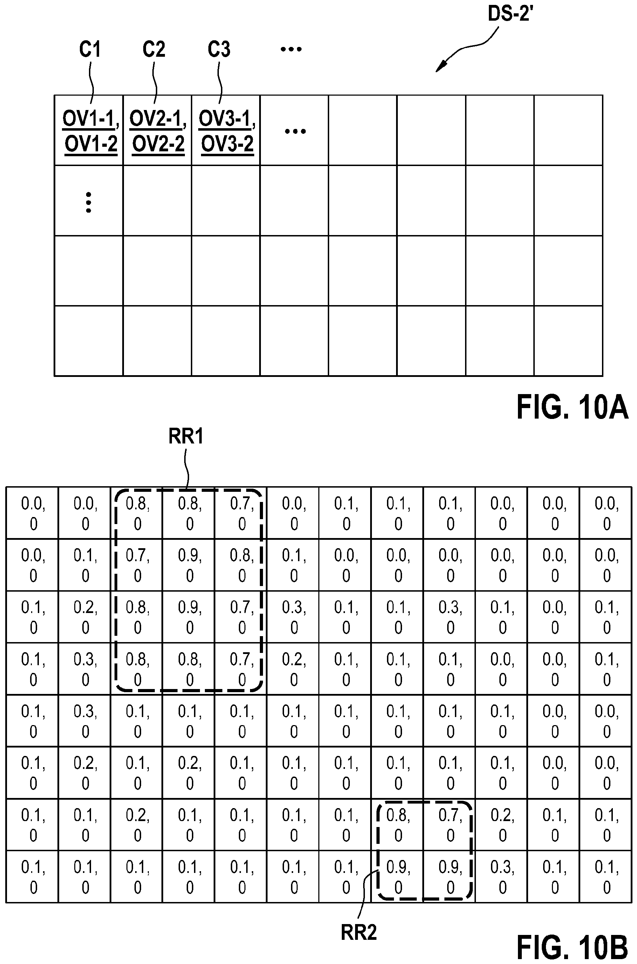

In some examples, Fig. 9, 10A, the method comprises: configuring 150, e.g., training 150a, the neural network NN to provide, as output data, a two-dimensional data set DS-2 (a simplified illustration DS-2' of which is shown by Fig. 10A) representing the plurality of cells C1, C2, C3, ..., wherein each cell is associated with at least one of: a) a first output value OV1-1, OV2-1, OV3-1, ... characterizing a probability for a presence of the object OBJ (Fig. 2) and/or at least one further object, or b) a second output value OV1-2, OV2-2, OV3-2, ... (Fig. 10A) characterizing a height of the object OBJ and/or of at least one further object. The optional block 152 of Fig. 9 symbolizes using the trained neural network NN for processing the data set DS-1.

In some examples, the output data set DS-2 may comprise a plurality of layers, wherein, for example, a first layer comprises cells with, e.g. scalar, cell values indicating the probability for a presence of the object OBJ at the position characterized by the respective cell, and wherein, for example, a second layer comprises cells with, e.g. scalar, cell values indicating a height of an object OBJ at the position characterized by the respective cell.

In some examples, Fig. 10B, the output data set DS-2 may comprise one layer, wherein each cell comprises a cell value having two elements, e.g., a vectorial cell value. The simplified rectangular array of Fig. 10B comprises a plurality of example cells each of which comprises two numbers or values, wherein a first value, e.g., ranging between 0.0 and 1.0, characterizes the probability for a presence of the object OBJ at the position characterized by the respective cell, and wherein a second value, e.g. comprising two possible values of "0" and "1" indicates a height of an object OBJ at the position characterized by the respective cell, e.g., in the form of a, presently binary, classification.

As an example, the dashed rounded rectangle RR1 of Fig. 10B indicates cells with comparatively large first value, e.g., indicating a high probability for presence of an object at the corresponding positions, but with "0" as second value, e.g., indicating that the object has a comparatively low height.

As a further example, the dashed rounded rectangle RR2 of Fig. 10B indicates cells with comparatively large first value, e.g., indicating a high probability for presence of an object at the corresponding positions, but with "1" as second value, e.g., indicating that the object is comparatively tall.

In some examples, the binary classification of the height may, e.g., be used to indicate for applications in the field of vehicles, whether an object is traversable, i.e., sufficiently low, to be passed by a vehicle (e.g., lowered curb, e.g., as opposed to a wall).

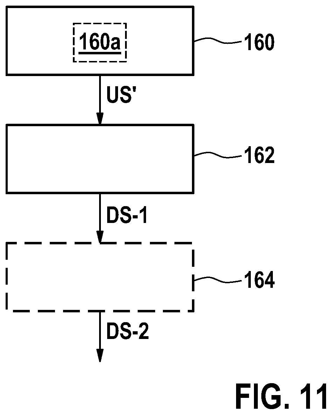

In some examples, Fig. 11, the method comprises providing 160, e.g., receiving 160a, a plurality US' of signals characterizing at least a portion of a respective plurality of transmitted ultrasonic signals US-1 (Fig. 2), determining 162 the two-dimensional data set DS-1 based on the plurality US' of signals. In some examples, the plurality US' of signals may be obtained by repeatedly transmitting ultrasonic signals US-1 from a transmitter TX-1 to a receiver RX-1. In some other examples, the plurality US' of signals may be obtained by transmitting ultrasonic signals from different transmitters (not shown) to one or more receivers RX-1. The optional block 164 of Fig. 11 symbolizes processing the data set DS-1 by the neural network NN, e.g., to obtain an output data set DS-2.

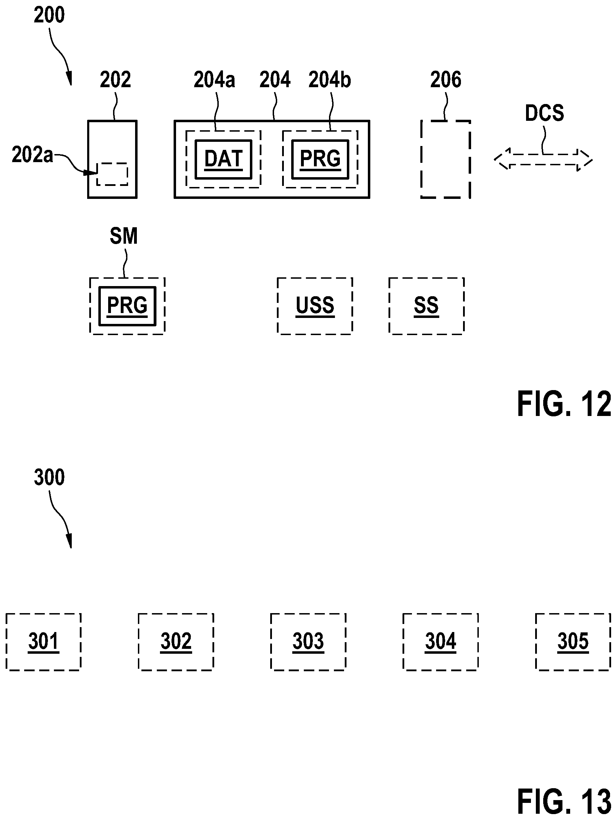

Some examples, Fig. 12, relate to an apparatus 200 configured to perform the method according to the disclosure.

In some examples, the apparatus 200 comprises at least one calculating unit, e.g. processor, 202, comprising for example at least one core 202a, and at least one memory unit 204 associated with (i.e., usable by) the at least one calculating unit 202, e.g. for at least temporarily storing a computer program PRG and/or data DAT, wherein the computer program PRG is e.g. configured to at least temporarily control an operation of the apparatus 200, e.g. for implementing at least some aspects of the method according to the disclosure.

In some examples, the data DAT may, e.g., comprise at least one of: a) information associated with the signal US-1, or b) information associated with the signal US-1', or c) information associated with the neural network NN (e.g., parameters, such as weights, or hyper parameters), or d) information associated with at least one of the data sets DS-1, DS-2.

In some examples, the at least one calculating unit 202 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). According to further examples, any combination of two or more of these elements is also possible.

According to some examples, the memory unit 204 comprises at least one of the following elements: a volatile memory 204a, e.g. a random-access memory (RAM), a non-volatile memory 204b, e.g. a Flash-EEPROM.

In some examples, the computer program PRG is at least temporarily stored in the non-volatile memory 204b. In some examples, the data DAT may at least temporarily be stored in the RAM 204a.

In some examples, an optional computer-readable storage medium SM comprising instructions, e.g. in the form of the computer program PRG. As an example, the storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

In some examples, the apparatus 200 may comprise an optional data interface 206, e.g. for bidirectional data exchange with at least one further device (not shown). As an example, by means of the data interface 206, a data carrier signal DCS may be received, e.g. from the at least one further device, for example via a wired or a wireless data transmission medium, e.g. over a (virtual) private computer network and/or a public computer network such as e.g. the Internet.

In some examples, the data carrier signal DCS may represent or carry the computer program PRG according to the examples, or at least a part thereof.

Some examples relate to the computer program PRG comprising instructions which, when the program is executed by a computer 202, cause the computer 202 to carry out the method according to the disclosure.

In some examples, Fig. 12, the apparatus 200 may comprise at least one ultrasonic sensor USS, e.g., comprising at least the receiver RX-1 (Fig. 2) (or, optionally, also the at least one transmitter TX-1). In some examples, the apparatus 200 may not comprise the at least one ultrasonic sensor USS, but may, e.g., be connected to the at least one ultrasonic sensor USS, e.g., via the optional data interface 206.

In some examples, Fig. 12, the apparatus 200 may comprise at least one signal source SS, e.g., providing the at least one signal US-1', the signal source SS, for example, comprising circuitry for processing an output signal of the receiver RX-1 (Fig. 2). In some examples, the apparatus 200 may not comprise the at least one signal source SS, but may, e.g., be connected to the at least one signal source SS, e.g., via the optional data interface 206.

Some examples, Fig. 13, relate to a use 30 Oof the method according to the disclosure and/or of the apparatus 200 according to the disclosure and/or of the computer program PRG according to the disclosure and/or of the computer-readable storage medium SM according to the disclosure and/or of the data carrier signal DCS according to the disclosure for at least one of: a) processing 301 at least one signal US-1' characterizing at least a portion of a transmitted ultrasonic signal US-1, or b) using 302 a neural network NN to determine a position of an object OBJ, or c) using 303 a neural network NN to determine a height of an object OBJ, or d) assisting 304 a parking procedure of a vehicle, or e) triggering 305 an emergency break of a vehicle.

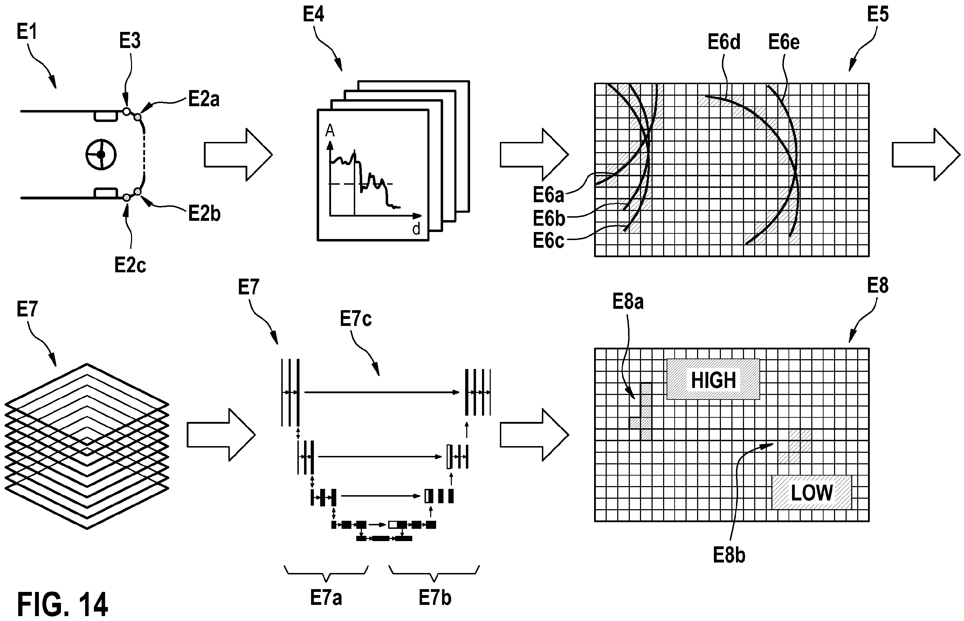

Fig. 14 schematically depicts a simplified flow chart according to some examples. Element E1 symbolizes portion, e.g., front portion, of a vehicle, wherein ultrasonic transmitters E2a, E2b, E2c are provided, and at least one ultrasonic receiver E3. Element E4 symbolizes a plurality of received signals that may be obtained according to some examples, e.g., as portions of received ultrasonic signals A3 (Fig. 2) or, for example, in the form of digital signals derived from received ultrasonic signals. Element E5 symbolizes an example data set DS-1 as may be obtained based on the signals E4 in some embodiments, e.g., by mapping elliptic curves E6a, E6b, E6c, E6d, E6e determined based on the signals E4 to respective cells.

Element E7 symbolizes a plurality of layers characterizing aspects of the example data set E5. Element E8 symbolizes the neural network NN, e.g., of the CNN-type, e.g., in accordance with a U-Net architecture having an encoder part E7a, a decoder part E7b, and, optionally, skip connections E7c there between. In some examples, the neural network E8 is configured to receive as input the plurality E7 of layers, and to output a data set E8 comprising a plurality of cells, e.g., corresponding with the cells of the data set E5. In some examples, the cells of the data set E8 may comprise first cell values indicating a probability of a presence of an object, see arrows E8a, E8b. In some examples, the cells of the data set E8 may comprise second cell values indicating a height of an object.

In some examples, the output data set E8 may be used to visualize the information as obtained by the neural network E7, e.g., using a graphical user interface, e.g., to a driver of a vehicle 10.

In some examples, e.g., related to the example aspects of Fig. 14, a vehicular ultrasonic signal processing methodology as follows can be provided: The ultrasonic sensors of the vehicle first determine, e.g., identify, echoes, e.g., from reflective surfaces of at least one object OBJ (Fig. 2). In some examples, the possible positions, e.g., sources of the echoes, may then be represented by elliptic curves, that may be mapped to the array of cells of the data structure DS-1, also see element E5 of Fig. 14. In some examples, data falling into the cells (i.e., according to the mapping), thus, e.g. forming the cell values, may then be, for example cell-wise, aggregated, using, e.g., one or more different methods, e.g., resulting in several layers E7, e.g., feature layers. In some examples, the neural network E7 is trained to detect and classify objects OBJ from the environment (e.g., probability of presence and/or height).

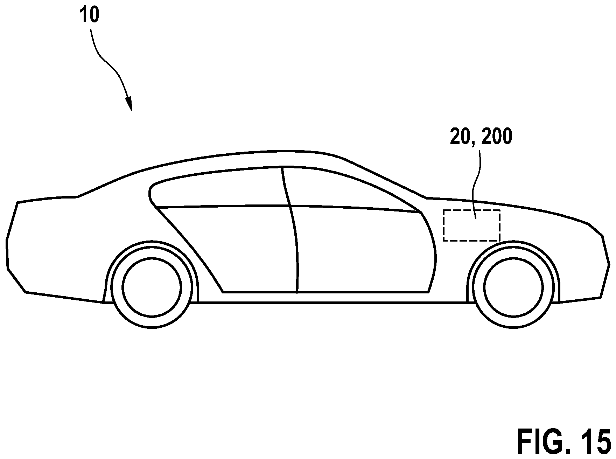

Some examples, Fig. 15, relate to a control unit, e.g., an electronic control unit, 20, e.g., for a vehicle 10, e.g., car or truck. In some examples, the control unit 20 may comprise or represent the apparatus 200.

Some examples, Fig. 15, relate to a vehicle 10, e.g., car or truck, comprising at least one apparatus 200 according to the disclosure and/or at least one control unit 20 according to the disclosure.

In the following, further aspects and examples are disclosed, which, in some examples, may be combined with at least one of the aspects and/or examples disclosed above.

In some examples, the principle according to the disclosure may be used for object detection, e.g., localization, and/or for height classification. In some examples, a framework, e.g., for adapting the information from ultrasonic sensors, e.g., at least one receiver RX-1, to a neural network NN, e.g. configured for processing two-dimensional data such as e.g., image data, may be provided.

In some examples, e.g., in every cycle, some ultrasonic sensors, e.g., transmitters, may transmit an impulse or signal, respectively, e.g., according to a predefined pattern. In some examples, scattered and/or reflected signal portions of these transmitted signals may then be received by at least one receiver RX-1 (Fig. 2), which may, e.g., identify one or more peaks (e.g., "echoes") in the received signal(s).

In some examples, one or more different quantities may be assigned to each echo, such as, e.g., an amplitude, a frequency, a background noise, a round trip time, and/or others. In some examples, e.g., based on round trip times belonging to the different peaks, ellipses, e.g. elliptic curves, can be determined, e.g., formed, e.g., as the possible sources of the reflections/scattering. In some examples, the elliptic curves associated with the echoes may then be rasterized, e.g., assigned to the respective cells, e.g., forming a grid or rectangular array, which, in some examples, may, e.g., form a fixed frame of reference. In some examples, this way, each echo may be assigned to those grid cell(s) through which the elliptic curve belonging to the respective echo goes through.

In some examples, going over each cell one by one, the echoes assigned to the cells may be aggregated, e.g., using one or more different methods, e.g., associated with a different feature each, comprising at least one of: a) an average amplitude of the echoes whose ellipses fall into a cell, or b) a sum of amplitudes of the echoes in the cell, or c) an average background noise of the amplitudes or the signal US-S', or d) a total number of echoes in a grid cell.

In some examples, if an ellipse of an echo ECHO1 goes through more cells than the ellipse of another echo ECHO2, then each cell belonging to the first echo ECHO1 may contain an object with a higher probability. In some examples, the less number of cells is assigned to an echo, the higher the probability that the reflection originates from a specific cell/position. In some examples, e.g., due to this, at least some of the above example features may be calculated by dividing their sum or average values with a number of cells the related ellipse crosses.

In some examples, the features may be calculated according to some specific ways the echoes can be aggregated within each cell. In some examples, different ways of providing features associated with the at least one signal US-1' and/or different numbers of features may be used. In some examples, each feature may be associated with one layer of the data set DS-1, thus, e.g., forming a number of feature layers.

In some examples, the feature layers forming the data set DS-1 may be used as inputs that are fed into the neural network NN, e.g., a U-Net convolutional neural network architecture. In some examples, the neural network NN assigns a categorical variable, e.g., cell value, to each of the grid cells. In some examples, the output of the neural network NN may serve a dual purpose. First, the output may contain an existence probability of an object OBJ in each cell. In some examples, this may, e.g., determine where the reflective objects OBJ are relative to the ego (e.g., reference point of a target system such as the vehicle 10), and, optionally, how large a free space around the ego is in various directions. In some examples, second, e.g., if there is an object in a cell, the neural network NN may categorize the object according to the following convention: a) the cell is categorized as "low", if the object can be driven over (e.g. speed bump, lowered curb), b) the cell is categorized as "high", if the object cannot be driven over (e.g. wall).

In some examples, the output of the neural network NN may thus be an object map, e.g., in the form of the data set DS-2, that assigns, e.g., exactly, one category to each cell: "empty", "low", or
"high".

In some examples, alternatively to a neural network NN, another type of machine learning model may be used.

In some examples, e.g., in order to train the model, e.g., neural network NN, labelled measurements, e.g. manually labelled measurements, may be used. In some examples, these labelled measurements may - e.g., apart from the echoes themselves - also record a position of the ego vehicle, e.g., in a specific frame of reference, e.g., attached to the ground. In some examples, objects of the environment may then manually be located, e.g., in a same frame of reference (e.g., together with their height class). In some examples, these labels may later be used, e.g., to mark cells that contain "no", "low", or "high" objects.

In some examples, the output DS-2 of the neural network NN, e.g., the object map, which e.g. tells where the objects OBJ are and if they can be driven over or not may e.g. be used for various purposes. In some examples, the cells in which objects are present can be clustered and assigned to objects in the environment. In some examples, this way, the output DS-2 may be used for object detection, e.g., in a perception part of an ADAS (Advanced Driver-Assistance System). In some examples, empty cells, e.g., in which no object is predicted, can, e.g., be used for free space estimation, which may e.g. provide information for parking systems. In some examples, e.g., if cells containing high objects are predicted at a close range, an ADAS system may utilize this information to decide, e.g., if an emergency break should be triggered.

## Claims

1. A method, for example computer-implemented method, for processing data associated with at least one ultrasonic sensor, comprising: receiving (102) at least one signal (US-1') characterizing at least a portion of a transmitted ultrasonic signal (US-1), determining (104), based on the at least one signal (US-1'), a two-dimensional data set (DS-1) representing a plurality of cells (C1, C2, C3, ...) characterizing potential positions of an object (OBJ) relative to the ultrasonic sensor associated with the at least one signal (US-1'), processing (106) the data set (DS-1) using a, for example artificial, neural network (NN).

2. The method according to claim 1, wherein the data set (DS-1) represents a rectangular array (RA) of the cells (C1, C2, C3, ...) corresponding to respective relative positions with respect to the ultrasonic sensor, wherein each cell (C1, C2, C3, ...) may be assigned at least one cell value (V1, V2, V3, ...) based on the at least one signal (US-1').

3. The method according to any of the preceding claims, wherein the neural network (NN) is a convolutional neural network, for example of the U-Net type, wherein, for example, the neural network (NN) is configured to receive image data as input data.

4. The method according to any of the preceding claims, comprising:
determining (110) at least one echo (ECHO1) based on the at least one signal (US-1'), determining (112) a, for example elliptic, curve (EC1) associated with the at least one echo (ECHO1), modifying (114) the data set (DS-1) based on the curve (EC1).

5. The method according to claim 4, comprising: mapping (120) the curve (EC1) to the plurality of cells (C1, C2, C3, ...), modifying (122), e.g., assigning (122a) or incrementing (122b) or decrementing (122c), a cell value (Vn) of a respective cell (Cn) based on the mapping (120).

6. The method according to any of the preceding claims, comprising:
determining (130) a feature (FEAT) based on the at least one signal (US-1'), modifying (132), e.g., assigning (132a) or incrementing (132b) or
decrementing (132c), a cell value (Vn) of a respective cell (Cn) based on the feature (FEAT).

7. The method according to claim 6, wherein the feature (FEAT) comprises at least one of: a) an amplitude of at least one echo (ECHO1) associated with the at least one signal (US-1'), or b) an average background noise associated with the at least one signal (US-1'), or c) a number of echoes associated with the at least one signal (US-1').

8. The method according to any of the preceding claims, comprising: providing (140) the data set (DS-1) in a form of one or more layers (LAY) to the neural network (NN), wherein for example each layer of the one or more layers (LAY) represents the plurality of cells (C1, C2, C3, ...) and corresponding cell values (V1, V2, V3, ...) associated with at least one feature (FEAT) determined based on the at least one signal (US-1'), and, optional, processing (142) the one or more layers (LAY) using the neural network (NN).

9. The method according to any of the preceding claims, comprising:
configuring (150), e.g., training (150a), the neural network (NN) to provide, as output data, a two-dimensional data set (DS-2) representing the plurality of cells (C1, C2, C3, ...), wherein each cell (C1, C2, C3, ...) is associated with at least one of: a) a first output value (OV1-1, OV2-1, 03-1, ...) characterizing a probability for a presence of the object (OBJ) and/or at least one further object, or b) a second output value (OV1-2, OV2-2, 03-2, ...) characterizing a height of the object (OBJ) and/or of at least one further object.

10. The method according to any of the preceding claims, comprising: providing (160), e.g., receiving (160a), a plurality (US') of signals characterizing at least a portion of a respective plurality of transmitted ultrasonic signals, determining (162) the two-dimensional data set (DS-1) based on the plurality (US') of signals.

11. An apparatus (200) configured to perform the method according to any of the preceding claims.

12. A computer program (PRG; PRG') comprising instructions which, when the program (PRG; PRG') is executed by a computer (202), cause the computer (202) to carry out the method according to at least one of the claims 1 to 10.

13. A computer-readable storage medium (SM) comprising instructions (PRG') which, when executed by a computer (202), cause the computer (202) to carry out the method according to at least one of the claims 1 to 10.

14. A data carrier signal (DCS) carrying and/or characterizing the computer program (PRG; PRG') of claim 12.

15. A use (300) of the method according to any of the claims 1 to 10 and/or of the apparatus (200) according to claim 11 and/or of the computer program (PRG; PRG') according to claim 12 and/or of the computer-readable storage medium (SM) according to claim 13 and/or of the data carrier signal (DCS) according to claim 14 for at least one of: a) processing (301) at least one signal (US-1') characterizing at least a portion of a transmitted ultrasonic signal (US-1), or b) using (302) a neural network to determine a position of an object (OBJ), or c) using (303) a neural network to determine a height of an object (OBJ), or d) assisting (304) a parking procedure of a vehicle, e) triggering (305) an emergency break of a vehicle.
